# EUROPEAN PATENT APPLICATION

(11) **EP 1 713 052 A2**
(43) Date of publication of application: **18.10.2006**
(21) Application number: 05257874.7
(22) Date of filing: 20.12.2005
(51) Int. Cl.: G09G 3/288

(54) **Plasma display apparatus, plasma display panel, and driving device and method thereof**

(30) Priority: 14.04.2005 KR 2005031207
(71) Applicant: LG Electronics Inc., Seoul 150-721 (KR)
(72) Inventor: Moon, Seong Hak, Guro-gu Seoul (KR)
(74) Representative: Camp, Ronald

(57) **Abstract**

A plasma display apparatus includes: a plasma display panel having a scan electrode, a sustain electrode and an address electrode for applying a predetermined voltage by constituting one frame as a combination of a plurality of subfields having different durations of emission and dividing each subfield into a reset period, an address period, and a sustain period; and a scan driver for supplying a scan reference voltage, which is greater than the lowest voltage of the reset period and is less than or the same as a reference voltage of the sustain period, and a scan pulse voltage, which is less than the scan reference voltage, to the scan electrode during the address period.

## Description

The present invention relates to a plasma display apparatus, a plasma display panel, and a driving device and method thereof.

In a plasma display panel, one unit cell is provided at a space between barrier ribs formed between a front panel and a rear panel. A main discharge gas such as neon (Ne), helium (He) or a mixture (He + Ne) of neon and helium and inert gas containing a small amount of xenon (Xe) are fill each cell. When discharge is performed using high frequency voltage, the inert gas generates vacuum ultraviolet radiation and phosphors provided between the barrier ribs emit visible light, thereby realizing an image. The plasma display panel is attracting attention as a next generation display due to its slimness and lightweight.

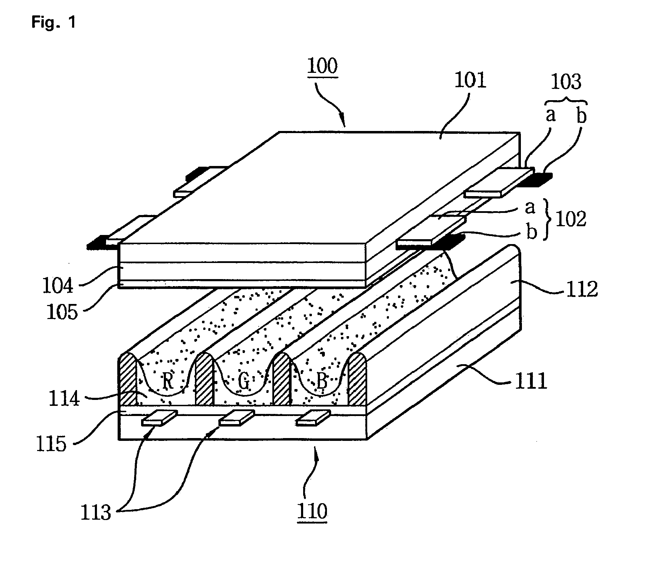

FIG. 1 is a perspective view illustrating a structure of a conventional plasma display panel.

As shown in FIG. 1, a plasma display panel includes a front substrate 100, which is a display surface for displaying the image thereon, and a rear substrate 110, which is spaced apart in parallel with and attached to the front substrate 100.

The front substrate 100 is based on a front glass 101, and includes a paired scan electrode (Y) 102 and a paired sustain electrode (Z) 103 for performing a mutual discharge in one pixel and sustaining emission of light, that is, the paired scan electrode 102 and the paired sustain electrode 103 each having a transparent electrode (a) formed of indium-tin-oxide (ITO) and a bus electrode (b) formed of metal. The scan electrode 102 and the sustain electrode 103 are covered with at least one dielectric layer 104, which controls a discharge current and insulates the paired electrodes. A passivation layer 105 is formed of oxide magnesium (MgO) on the dielectric layer 104 to facilitate a discharge condition.

The rear substrate 110 is based on a rear glass 111, and includes stripe-type (or well-type) barrier ribs 112 for forming a plurality of discharge spaces (that is, discharge cells) and arranged in parallel. Also, the rear substrate 110 includes a plurality of address electrodes (X) 113 arranged in parallel with the barrier ribs 112, and performing an address discharge and generating the vacuum ultraviolet radiation. Red (R), green (G), blue (B) phosphors 114 emit visible radiation for displaying the image in the address discharge, and are coated over an upper surface of the rear substrate 110. White dielectric layer 115 is formed between the address electrode 113 and the phosphor 114, and protects the address electrode 113 and emits the visible rays from the phosphor 114 to the rear substrate 100.

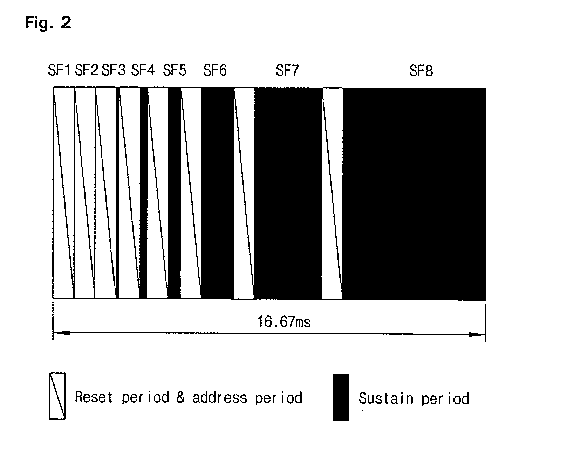

A method for expressing an image grayscale in the plasma display panel is illustrated in FIG. 2, which is a view illustrating a conventional method for expressing the image grayscale in the plasma display panel.

As shown in FIG. 2, one frame is divided into several subfields each having a different duration of emission. Each subfield is divided into a reset period (RPD) for initializing all cells, an address period (APD) for selecting a discharged cell, and a sustain period (SPD) for expressing the grayscale depending on the number times of discharge. For example, when the image is displayed in 256 grayscales, a frame period (16.67ms) corresponding to a 1/60 second is divided into eight subfields (SF1 to SF8), and each of the eight subfields (SF1 to SF8) is divided into a reset period, an address period, and a sustain period.

The reset period and the address period of each subfield are the same for each subfield. The address discharge for selecting the cell to be discharged is generated by a voltage difference between the address electrode and the scan electrode being the transparent electrode. The sustain period is increased in the ratio of 2ⁿ (n=0,1,2,3,4,5,6,7) for each subfield. Since the sustain period is different for each subfield as described above, the sustain period of each subfield (that is, the duration of sustain discharge) is controlled, thereby expressing the image grayscale. A driving waveform of the above plasma display panel is as follows.

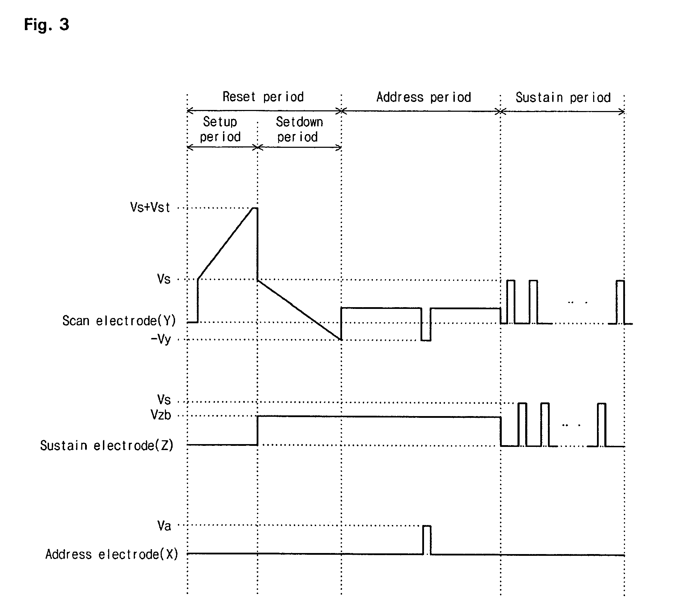

FIG. 3 illustrates a driving waveform of a conventional plasma display panel.

As shown in FIG. 3, the plasma display panel is driven by dividing each subfield into a reset period for initializing all cells, an address period for selecting the cell to be discharged, and a sustain period for sustaining a discharge of the selected cell.

During a setup period of the reset period, a ramp-up waveform is concurrently applied to all scan electrodes. The ramp-up waveform generates a weak dark discharge within the discharge cells of the whole screen. The setup discharge causes positive wall charges to be accumulated on the address electrode and the sustain electrode, and negative wall charges to be accumulated on the scan electrode.

During a setdown period, after the ramp-up waveform has been supplied, a ramp-down waveform, which falls from a positive voltage lower than a peak voltage of the ramp-up waveform to a specific voltage lower than ground (GND), generates a weak erasure discharge within the cells, thereby sufficiently erasing excessive wall charges from the scan electrode. The setdown discharge causes wall charges of an amount to allow a stable address discharge, to uniformly remain within the cells.

During the address period, a negative scan signal is sequentially applied to the scan electrodes and at the same time, a positive data signal is synchronized with the scan signal and applied to the address electrodes. The voltage difference between the scan signal and the data signal is added to the wall charge generated in the reset period, thereby generating the address discharge within the cell to which the data signal is applied. Wall charges of an amount, which enables the discharge when the sustain voltage (Vs) is applied, are generated within the cells selected by the address discharge. During the setdown period and the address period, a positive voltage (Vzb) is supplied to the sustain electrode to reduce the voltage difference with the scan electrode and prevent erroneous discharge with the scan electrode.

During the sustain period, the sustain signal is alternately supplied to the scan electrode and the sustain electrode. At the cell selected through the address discharge, whenever the sustain pulse is applied while the sustain pulse being added to the wall voltage within the cell, a sustain discharge (that is, a display discharge) is generated between the scan electrodes and the sustain electrode.

By doing as such, a process of driving the plasma display panel at one subfield is completed.

However, the conventional plasma display panel has general drawbacks in the driving process based on one subfield when a complex discharge mechanism of the plasma display panel is considered. Specifically, a drawback in the address period will be described below.

As shown in FIG. 3, in the conventional plasma display panel, the scan reference voltage applied to the scan electrode during the address period of at each subfield is adjusted to be the ground level or the positive voltage level higher than the ground level, and the scan reference voltage at all subfield is maintained at a fixed level.

However, there is a drawback in that the scan reference voltage is set to the positive voltage as such and as a result, the data pulse voltage applied to the address electrode necessarily rises to thereby increase power consumption of the plasma display panel and require a high voltage resistance of a data driver integrated circuit (IC), thereby reducing a driving margin.

The present invention seeks to provide an improved plasma display apparatus, a plasma display panel, and a driving device and method thereof for improving a driving efficiency.

In accordance with a first aspect of the invention, there is provided a plasma display apparatus including: a plasma display panel having a scan electrode, a sustain electrode and an address electrode for applying a predetermined voltage by constituting one frame as a combination of a plurality of subfields having different durations of emission and dividing each subfield into a reset period, an address period, and a sustain period; and a scan driver for supplying a scan reference voltage, which is greater than the lowest voltage of the reset period and is less than or the same as a reference voltage of the sustain period, and a scan pulse voltage, which is less than the scan reference voltage, to the scan electrode during the address period.

In accordance with another aspect of the invention, there is provided a driving method of a plasma display apparatus having a plasma display panel for displaying an image by applying a predetermined voltage to at least one electrode, by constituting one frame as a combination of a plurality of subfields having the different durations of emission and dividing each subfield into a reset period for initialization, an address period for selecting a cell, and a sustain period for sustaining discharge of the selected cell, the method including the step of: supplying a scan reference voltage, which is greater than the lowest voltage of the reset period and is less than or the same as a reference voltage of the sustain period, and a scan pulse voltage, which is less than the scan reference voltage, to the scan electrode during the address period.

Embodiments of the present invention can have the effect of adjusting the scan reference voltages applied to the scan electrode during the address period and reducing the data pulse voltage, thereby relaxing the requirement for a high voltage resistance required by a data driver IC and improving the driving efficiency.

Embodiments of the invention will be described in detail by way of nonlimiting example only, with reference to the drawings in which like numerals refer to like elements.

FIG. 1 is a perspective view illustrating a structure of a conventional plasma display panel;

FIG. 2 illustrates a method for realizing an image grayscale of a conventional plasma display panel;

FIG. 3 illustrates a driving waveform of a conventional plasma display apparatus;

FIG. 4 illustrates a plasma display apparatus according to a first embodiment of the present invention;

FIGS. 5 to 8 illustrate driving waveforms according to a first embodiment of the present invention;

FIG. 9 illustrates a plasma display apparatus according to a second embodiment of the present invention; and

FIGS. 10 to 15 illustrate driving waveforms according to a second embodiment of the present invention.

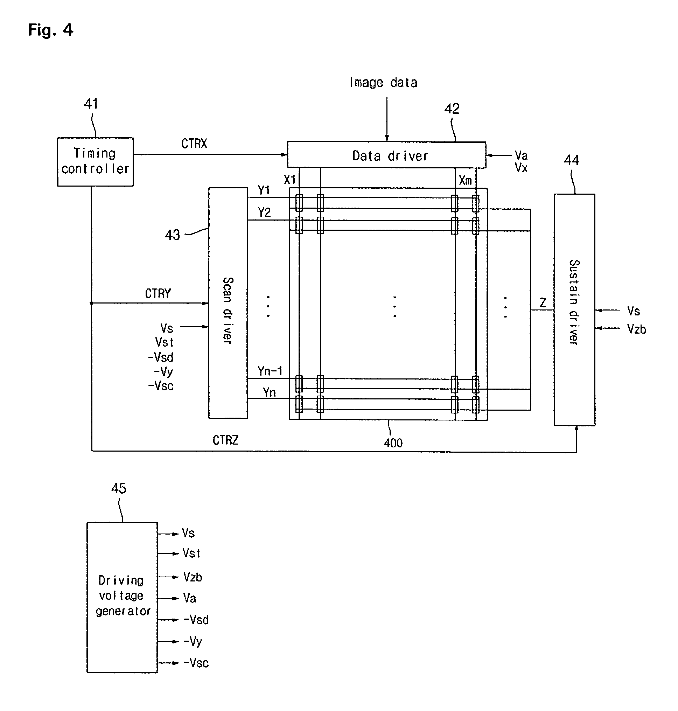

As shown in FIG. 4, a plasma display apparatus includes a plasma display panel 400 for displaying an image of frames constituted of a combination of at least two subfields, by applying a driving pulse to address electrodes (X1 to Xm), scan electrodes (Y1 to Yn), and a sustain electrode (Z) in a reset period, an address period, and a sustain period; a data driver 42 for supplying data to the address electrodes (X1 to Xm) provided at a rear panel (not shown) of the plasma display panel 400; a scan driver 43 for driving the scan electrodes (Y1 to Yn) by applying a scan reference voltage (-Vsc), which is greater than the lowest voltage (-Vsd) of the reset period and less than or the same as a reference voltage (GND) of the sustain period, and a scan pulse voltage (-Vy-Vsc), which is less than the scan reference voltage (-Vsc), to the scan electrodes (Y1 to Yn) so as to select a scan line; a sustain driver 44 for driving the sustain electrode (Z) of a common electrode; a timing controller 41 for controlling each of the drivers 42, 43 and 44; and a driving voltage generator 45 for supplying a driving voltage to each of the drivers 42, 43 and 44.

The function and operation of each constituent element of the plasma display apparatus will be described in detail below.

The plasma display panel 400 includes a front panel (not shown), and the rear panel (not shown) spaced apart from and attached to the front panel. The front panel includes a plurality of electrodes, for example, the scan electrodes (Y1 to Yn) and the sustain electrode (Z) paired with each other. The rear panel includes the address electrodes (X1 to Xm) intersected with the scan electrodes (Y1 to Yn) and the sustain electrode (Z).

The data driver 42 receives data, which is inverse gamma corrected and error diffused in an inverse gamma correction circuit and error diffusion circuit and then mapped to a predetermined subfield pattern in a subfield mapping circuit. The data driver 42 samples and latches the received data under the control of the timing controller 41 and then, supplies the latched data to the address electrodes (X1 to Xm).

The scan driver 43 applies a reset waveform having a gradually rising pulse or a gradually falling pulse to the scan electrodes (Y1 to Yn), and initializes a whole screen during the reset period under the control of the timing controller 41.

After the scan driver 43 applies the reset waveform to the scan electrodes (Y1 to Yn), it supplies the scan reference voltage (-Vsc), which is greater than the lowest voltage (-Vsd) of the reset period and is less than or the same as the reference voltage (GND) of the sustain period, and the scan pulse voltage (-Vy-Vsc), which is less than the scan reference voltage (-Vsc), to the scan electrodes (Y1 to Yn) in order to select the scan line during the address period.

The scan driver 43 supplies a sustain pulse, which can enable a sustain discharge at a cell selected in the address period, to the scan electrodes (Y1 to Yn) during the sustain period.

After the sustain driver 44 supplies a positive Z-bias voltage (Vzb) to the sustain electrode (Z) during at least a predetermined time of the reset period under the control of the timing controller 41, it operates alternately with the scan driver 43 and supplies the sustain pulse to the sustain electrode (Z).

The timing controller 41 receives vertical/horizontal synchronous signals, generates timing control signals (CTRX, CTRY and CTRZ) necessary to each of the drivers 42, 43 and 44, and supplies the generated timing control signals (CTRX, CTRY and CTRZ) to the corresponding drivers 42, 43 and 44, thereby controlling each of the drivers 42, 43 and 44. The timing control signal (CTRX) applied to the data driver 42 includes a data sampling clock, a latch control signal, and a switch control signal for controlling ON/OFF times of an energy recovery circuit and a driving switching element. The timing control signal (CTRY) applied to the scan driver 43 includes a switch control signal for controlling ON/OFF times of an energy recovery circuit and a driving switching element, which are provided in the scan driver 43. The timing control signal (CTRZ) applied to the sustain driver 44 includes a switch control signal for controlling ON/OFF times of an energy recovery circuit and a driving switching element, which are provided in the sustain driver 44.

The driving voltage generator 45 generates a variety of driving voltages required by each of the drivers 42, 43 and 44. The driving voltages include a sustain voltage (Vs), a setup voltage (Vst), the Z-bias voltage (Vzb), a data voltage (Va), the setdown voltage (-Vsd), a scan voltage (-Vy), the scan reference voltage (-Vsc), and the like. The driving voltages can be varied depending on a composition of a discharge gas or a structure of a discharge cell.

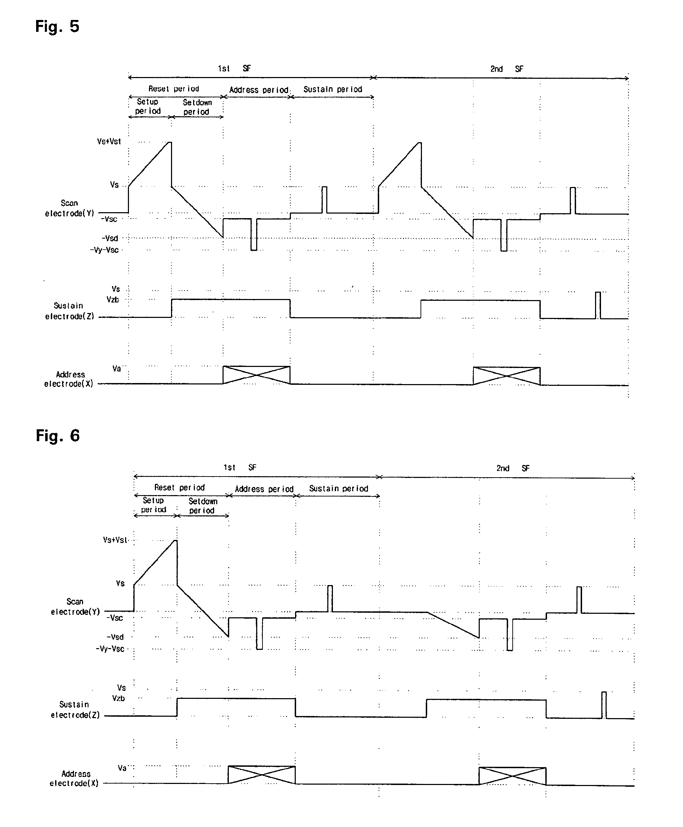

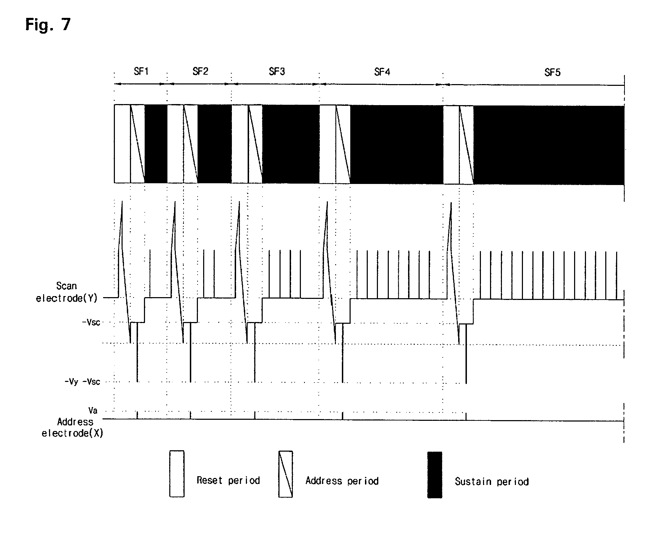

The operation of the plasma display apparatus will now be described in detail with reference to FIGS. 5 to 8.

As shown in FIGS. 5 to 8, the plasma display apparatus is driven by dividing each subfield into a reset period for initializing all cells, an address period for selecting the cell to be discharged, and a sustain period for sustaining discharge of the selected cell.

A feature of this embodiment of the present invention is the voltage applied to the scan electrodes (Y1 to Yn) during the address period. The present embodiment is characterized by supplying the scan reference voltage (-Vsc), which is greater than the lowest voltage (-Vsd) of the reset period and is less than or the same as the reference voltage (GND) of the sustain period, and the scan pulse voltage (-Vy-Vsc), which is less than the scan reference voltage (-Vsc), to the scan electrodes (Y1 to Yn) during the address period.

The voltage applied in each period and its function will be described in detail below.

During a setup period of the reset period, a ramp-up waveform is concurrently applied to all scan electrodes (Y1 to Yn). This ramp-up waveform causes a weak dark discharge within the discharge cells of the whole screen. A setup discharge causes positive wall charges to be accumulated on the address electrodes (X1 to Xm) and the sustain electrode (Z), and negative wall charges to be accumulated on the scan electrodes (Y1 to Yn).

Next, during a setdown period for applying a ramp-down voltage, the positive wall charges of the address electrodes (X1 to Xm) are sustained without change, the positive wall charges of the sustain electrode (Z) are erased by discharge between the sustain electrode (Z) and the scan electrodes (Y1 to Yn), and a large number of the negative wall charges of the scan electrodes (Y1 to Yn) are shared by the sustain electrode (Z) and the scan electrodes (Y1 to Yn).

This setdown discharge causes the wall charges of the number, which allows a stable address discharge, to uniformly remain within the cells.

During the setdown period, the positive Z-bias voltage (Vzb) is applied to the sustain electrode (Z) and the ramp-down voltage is applied to the scan electrodes (Y1 to Yn) so as to reduce the wall charges at a proper level. Accordingly, the scan electrodes (Y1 to Yn) have a lower voltage level than the sustain electrode (Z), that is, a polarity is inverted unlike the setup period to thereby erase and reduce the wall charges, which are accumulated during the setup period, at a proper level.

In the address period, when the positive data pulse voltage (Va) is applied to the address electrodes (X1 to Xm), and the scan pulse voltage (-Vy-Vsc) falling from the scan reference voltage (-Vsc) is synchronized and applied to the scan electrodes (Y1 to Yn), a voltage difference (Va + Vy + Vsc) between the address electrodes (X1 to Xm) and the scan electrodes (Y1 to Yn) is added to a wall voltage (Vw), which is formed between the address electrodes (X1 to Xm) and the scan electrodes (Y1 to Yn) and is caused by the wall charges provided during the reset period, to thereby an address discharge.

The applied scan reference voltage (-Vsc) to the scan electrodes (Y1 to Yn) is adjusted to be greater than the lowest voltage (-Vsd) of the reset period and be less than or the same as the reference voltage (GND) of the sustain period, and the lowest scan pulse voltage (-Vy-Vsc) is set to be less than the scan reference voltage (-Vsc) and the lowest voltage (-Vsd) of the reset period. Accordingly, the positive data pulse voltage (Va) can be reduced.

In other words, the scan reference voltage (-Vsc) falls and accordingly, the data pulse voltage (Va) is also set less in magnitude to thereby allow low voltage driving and relax a requirement for a high voltage resistance of a data driver integrated circuit (IC).

As shown in FIGS. 5 to 8, it is desirable that the scan reference voltage (-Vsc) is set identical at all of the subfields constituting one frame.

As such, the scan reference voltage (-Vsc) is identically set at all subfields, thereby reducing the manufacturing cost of the plasma display apparatus.

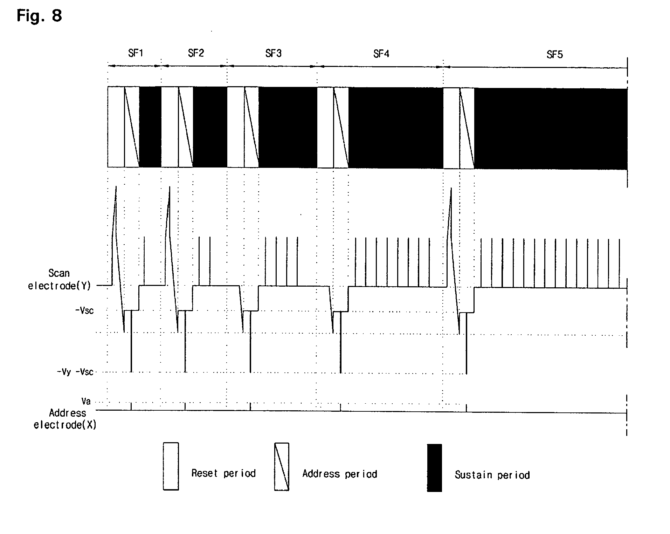

As shown in FIGS. 6 and 8, it is desirable that a ramp-down pulse is applied, as the reset waveform, to the scan electrodes (Y1 to Yn) during the reset period of at least any one of third and later subfields.

As such, the ramp-down pulse is used as the reset waveform, thereby improving the contrast ratio of the plasma display apparatus. In other words, in consideration of the fact that the wall charge distribution of a discharge space is relatively stable at the third and later subfields, a ramp-up pulse capable of generating a strong discharge is avoided as much as possible, thereby improving the contrast ratio of the plasma display apparatus.

Meantime, the positive Z-bias voltage (Vzb) is supplied to the sustain electrode (Z) during the setdown period and the address period, to reduce the voltage difference and prevent erroneous discharge between the sustain electrode (Z) and the scan electrodes (Y1 to Yn).

In the sustain period, the sustain pulse rising from the sustain reference voltage (GND) to the sustain voltage (Vs) is applied alternately to the scan electrodes (Y1 to Yn) and the sustain electrode (Z). At the cell selected through the address discharge, whenever the sustain pulse is applied while the sustain pulse being added to the wall voltage within the cell, a sustain discharge (that is, a display discharge) is generated between the scan electrodes (Y1 to Yn) and the sustain electrode (Z).

By doing as such, a process of driving the plasma display apparatus at one subfield is completed.

As described, the present embodiment provides a plasma display apparatus for improving the driving efficiency, by adjusting the scan reference voltage applied to the scan electrode during the address period and reducing the data pulse voltage.

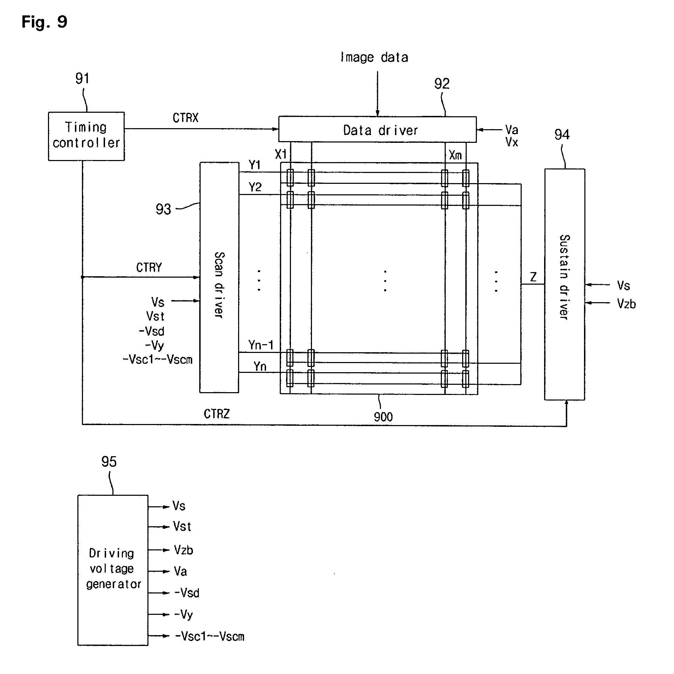

FIG. 9 illustrates a plasma display apparatus according to a second embodiment.

As shown in FIG. 9, a plasma display apparatus includes a plasma display panel 900 for displaying an image of frames constituted of a combination of at least two subfields, by applying a driving pulse to address electrodes (X1 to Xm), scan electrodes (Y1 to Yn), and a sustain electrode (Z) in a reset period, an address period, and a sustain period; a data driver 92 for supplying data to the address electrodes (X1 to Xm) provided at a rear panel (not shown) of the plasma display panel 900; a scan driver 93 for driving the scan electrodes (Y1 to Yn) by applying scan reference voltages (-Vsc1 to - Vscm), which are controlled in magnitude depending on the subfield, and scan pulse voltages (-Vy-Vsc1 to -Vy-Vscm), which are less than the scan reference voltages (-Vsc1 to -Vscm), to the scan electrodes (Y1 to Yn); a sustain driver 94 for driving the sustain electrode (Z) of a common electrode; a timing controller 91 for controlling each of the drivers 92, 93 and 94; and a driving voltage generator 95 for supplying a driving voltage to each of the drivers 92, 93 and 94.

The function and operation of each constituent element of the plasma display apparatus will be described in detail below.

The plasma display panel 900 includes a front panel (not shown), and the rear panel (not shown) spaced apart from and attached to the front panel. The front panel includes a plurality of electrodes, for example, the scan electrodes (Y1 to Yn) and the sustain electrode (Z) paired with each other. The rear panel includes the address electrodes (X1 to Xm) intersected with the scan electrodes (Y1 to Yn) and the sustain electrode (Z).

The data driver 92 receives data, which is inverse gamma corrected and error diffused in an inverse gamma correction circuit and error diffusion circuit and then mapped to a predetermined subfield pattern in a subfield mapping circuit. The data driver 92 samples and latches the received data under the control of the timing controller 91 and then, supplies the latched data to the address electrodes (X1 to Xm).

The scan driver 93 applies a reset waveform having a gradually rising pulse or a gradually falling pulse to the scan electrodes (Y1 to Yn), and initializes a whole screen during the reset period under the control of the timing controller 91.

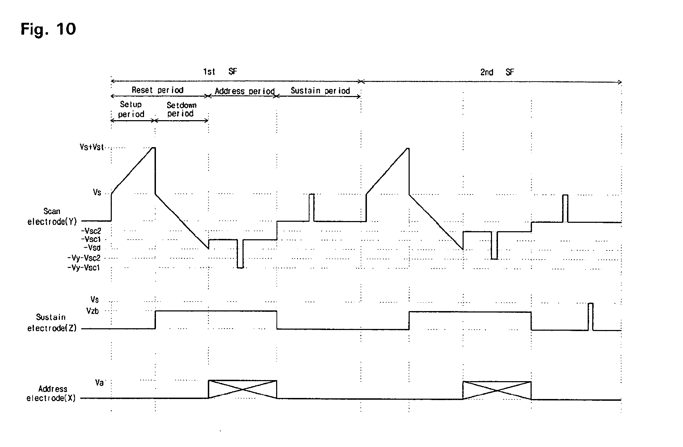

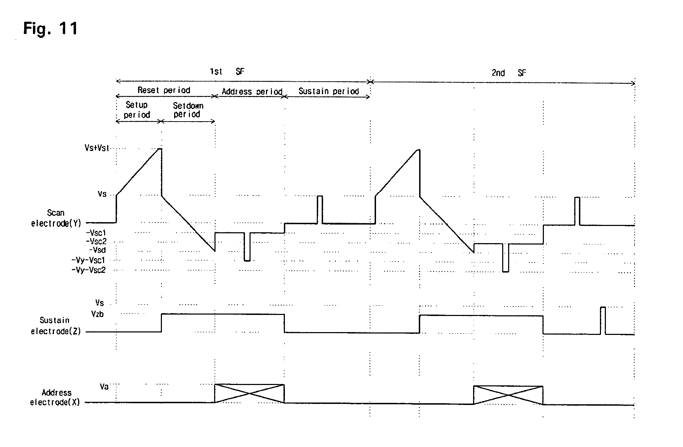

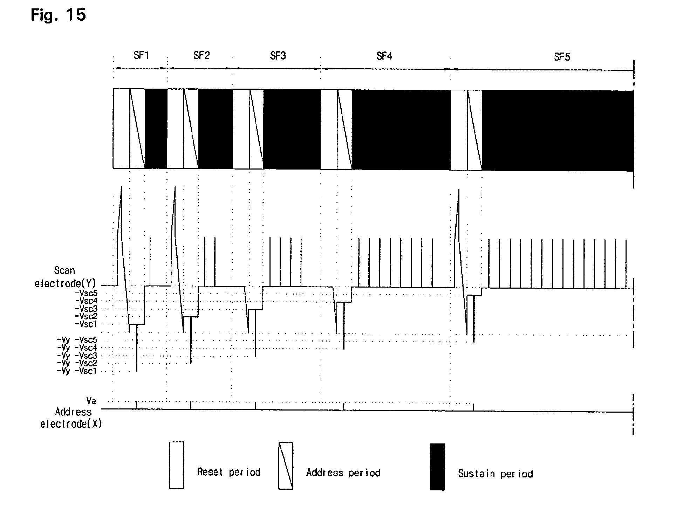

After the scan driver 93 applies the reset waveform to the scan electrodes (Y1 to Yn), it supplies the scan reference voltages (-Vsc1 to - Vscm), which are greater than the lowest voltage (-Vsd) of the reset period and are less than or the same as the reference voltage (GND) of the sustain period, and the scan pulse voltages (-Vy-Vsc1 to -Vy-Vscm), which are less than the scan reference voltages (-Vsc1 to -Vscm), to the scan electrodes (Y1 to Yn) in order to select a scan line during the address period. A feature of the present embodiment is that the scan reference voltages (-Vsc1 to -Vscm) applied to the scan electrodes (Y1 to Yn) are controlled depending on the subfield. This will be described later with reference to FIGS. 10 to 15.

The scan driver 93 supplies a sustain pulse, which can enable a sustain discharge at a cell selected in the address period, to the scan electrodes (Y1 to Yn) during the sustain period.

After the sustain driver 94 supplies a positive Z-bias voltage (Vzb) to the sustain electrode (Z) during at least a predetermined time of the reset period under the control of the timing controller 91, it operates alternately with the scan driver 93 and supplies the sustain pulse to the sustain electrode (Z).

The timing controller 91 receives vertical/horizontal synchronous signals, generates timing control signals (CTRX, CTRY and CTRZ) necessary to each of the drivers 92, 93 and 94, and supplies the generated timing control signals (CTRX, CTRY and CTRZ) to the corresponding drivers 92, 93 and 94, thereby controlling each of the drivers 92, 93 and 94. The timing control signal (CTRX) applied to the data driver 92 includes a data sampling clock, a latch control signal, and a switch control signal for controlling ON/OFF times of an energy recovery circuit and a driving switching element. The timing control signal (CTRY) applied to the scan driver 93 includes a switch control signal for controlling ON/OFF times of an energy recovery circuit and a driving switching element, which are provided in the scan driver 93. The timing control signal (CTRZ) applied to the sustain driver 94 includes a switch control signal for controlling ON/OFF times of an energy recovery circuit and a driving switching element, which are provided in the sustain driver 94.

The driving voltage generator 95 generates a variety of driving voltages required by each of the drivers 92, 93 and 94. The driving voltages include a sustain voltage (Vs), a setup voltage (Vst), the Z-bias voltage (Vzb), a data voltage (Va), the setdown voltage (-Vsd), a scan voltage (-Vy), the scan reference voltages (-Vsc1 to -Vscm), and the like. The driving voltages can be varied depending on a composition of a discharge gas or a structure of a discharge cell.

An operation of the plasma display apparatus will now be described in detail below with reference to FIGS. 10 to 15.

As shown in FIGS. 10 to 15, the plasma display apparatus is driven by dividing each subfield into the reset period for initializing all cells, the address period for selecting the cell to be discharged, and the sustain period for sustaining discharge of the selected cell.

A feature of the present embodiment is the voltage applied to the scan electrodes (Y1 to Yn) during the address period. The present embodiment is characterized by supplying the scan reference voltages (-Vsc1 to -Vscm), which are greater than the lowest voltage (-Vsd) of the reset period and are less than or the same as the reference voltage (GND) of the sustain period, and the scan pulse voltages (-Vy-Vsc1 to -Vy-Vscm), which are less than the scan reference voltages (-Vsc1 to -Vscm), to the scan electrodes (Y1 to Yn) during the address period, and by controlling the scan reference voltages (-Vsc1 to -Vscm) depending on the subfield.

The voltage applied in each period and its function will be described in detail below.

During a setup period of the reset period, a ramp-up waveform is concurrently applied to all scan electrodes (Y1 to Yn). This ramp-up waveform causes a weak dark discharge within the discharge cells of the whole screen. A setup discharge causes positive wall charges to be accumulated on the address electrodes (X1 to Xm) and the sustain electrode (Z), and negative wall charges to be accumulated on the scan electrodes (Y1 to Yn).

Next, during a setdown period for applying a ramp-down voltage, the positive wall charges of the address electrodes (X1 to Xm) are sustained without change, the positive wall charges of the sustain electrode (Z) are erased by discharge between the sustain electrode (Z) and the scan electrodes (Y1 to Yn), and a large number of the negative wall charges of the scan electrodes (Y1 to Yn) are shared by the sustain electrode (Z) and the scan electrodes (Y1 to Yn).

This setdown discharge causes the wall charges of the number, which allows a stable address discharge, to uniformly remain within the cells.

During the setdown period, the positive Z-bias voltage (Vzb) is applied to the sustain electrode (Z) and the ramp-down voltage is applied to the scan electrodes (Y1 to Yn) so as to reduce the wall charges at a proper level. Accordingly, the scan electrodes (Y1 to Yn) have a lower voltage level than the sustain electrode (Z), that is, a polarity is inverted unlike the setup period to thereby erase and reduce the wall charges, which are accumulated during the setup period, at a proper level.

In the address period, when the positive data pulse voltage (Va) is applied to the address electrodes (X1 to Xm), and the scan pulse voltages (-Vy-Vsc1 to -Vy-Vscm) falling from the scan reference voltages (-Vsc1 to - Vscm) are synchronized and applied to the scan electrodes (Y1 to Yn), a voltage difference between the address electrodes (X1 to Xm) and the scan electrodes (Y1 to Yn) is added to a wall voltage, which is formed between the address electrodes (X1 to Xm) and the scan electrodes (Y1 to Yn) and is caused by the wall charges provided during the reset period, to thereby an address discharge.

At this time, the applied scan reference voltages (-Vsc1 to -Vscm) to the scan electrodes (Y1 to Yn) are adjusted to be greater than the lowest voltage (-Vsd) of the reset period and be less than or the same as the reference voltage (GND) of the sustain period, and the lowest scan pulse voltage (-Vy-Vsc1 to -Vy-Vscm) are set to be less than the scan reference voltages (-Vsc1 to -Vscm) and the lowest voltage (-Vsd) of the reset period. Accordingly, the positive data pulse voltage (Va) can be reduced.

In other words, the scan reference voltages (-Vsc1 to -Vscm) are adjusted and fall depending on the subfield and accordingly, the data pulse voltage (Va) is also set less in magnitude to thereby allow low voltage driving and relax a requirement for a high voltage resistance of a data driver integrated circuit (IC).

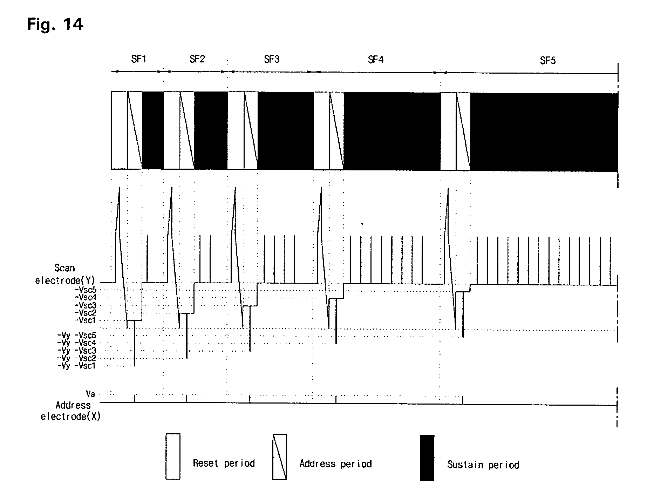

As shown in FIGS. 14 to 15, it is desirable that the scan reference voltages (-Vsc1 to -Vscm) are adjusted depending on a weighted value of the subfield constituting one frame. More desirably, the scan reference voltages (-Vsc1 to -Vscm) are adjusted in proportional to the weighed value of the subfield.

In other words, the scan reference voltages (-Vsc1 to -Vscm) are adjusted low at the subfield for expressing lower grayscale, and high at the subfield for expressing higher grayscale.

As such, the scan reference voltages (-Vsc1 to -Vscm) are adjusted in proportion to the weighted value of the subfield, to increase a strength of the address discharge at the lower grayscale, thereby stabilizing a later sustain discharge, and reduce power consumption of the address discharge at the higher grayscale. The magnitude of a weighted value is about brightness.

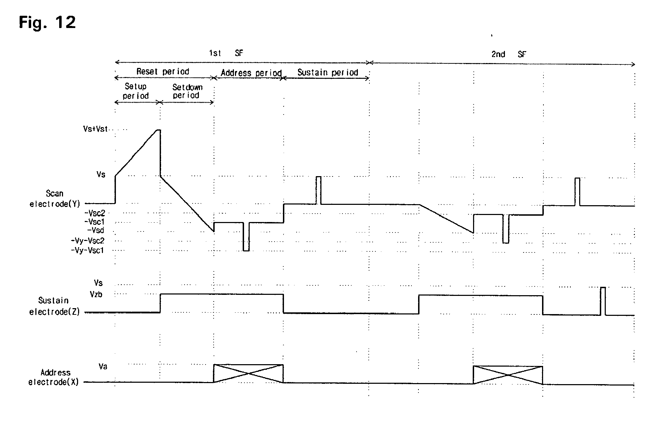

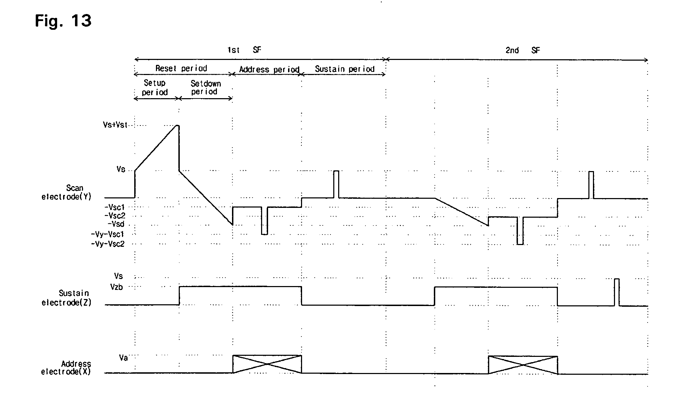

As shown in FIGS. 12 and 13, it is desirable that a ramp-down pulse is applied, as the reset waveform, to the scan electrodes (Y1 to Yn) during the reset period of at least any one of third and later subfields.

As such, the ramp-down pulse is used as the reset waveform, thereby improving the contrast ratio of the plasma display apparatus. In other words, in consideration of the fact that the wall charge distribution of a discharge space is relatively stable at the third and later subfields, a ramp-up pulse capable of generating a strong discharge is avoided as much as possible, thereby improving the contrast ratio of the plasma display apparatus.

Meantime, the positive Z-bias voltage (Vzb) is supplied to the sustain electrode (Z) during the setdown period and the address period, to reduce the voltage difference and prevent erroneous discharge between the sustain electrode (Z) and the scan electrodes (Y1 to Yn).

In the sustain period, the sustain pulse rising from the sustain reference voltage (GND) to the sustain voltage (Vs) is applied alternately to the scan electrodes (Y1 to Yn) and the sustain electrode (Z). At the cell selected through the address discharge, whenever the sustain pulse is applied while the sustain pulse being added to the wall voltage within the cell, a sustain discharge (that is, a display discharge) is generated between the scan electrodes (Y1 to Yn) and the sustain electrode (Z).

By doing as such, a process of driving the plasma display apparatus at one subfield is completed.

As described, embodiments of the present invention can provide a plasma display apparatus for improving driving efficiency, by adjusting the scan reference voltages (-Vsc1 to -Vscm) applied to the scan electrode (Y1 to Yn) during the address period and reducing the data pulse voltage.

Embodiments of the invention having been thus described, it will be obvious that the same may be varied in many ways. Such variations are not to be regarded as a departure from the scope of the invention, and all such modifications as would be obvious to one skilled in the art are intended to be included within the scope of the claims.

## Claims

1. A plasma display apparatus comprising:
a plasma display panel having a scan electrode, a sustain electrode and an address electrode, means for applying to the address electrode a predetermined voltage by constituting one frame as a combination of a plurality of subfields having different durations of emission and dividing each subfield into a reset period, an address period, and a sustain period; and
a scan driver arranged to supply a scan reference voltage, which is greater than the lowest voltage of the reset period and is less than or the same as a reference voltage of the sustain period, and a scan pulse voltage, which is less than the scan reference voltage, to the scan electrode during the address period.

2. The apparatus of claim 1, wherein the scan pulse voltage is less than the lowest voltage of the reset period.

3. The apparatus of claim 1, arranged to apply the same scan reference voltages to the scan electrode during the address periods of the subfields constituting the one frame.

4. The apparatus of claim 1, wherein the one frame has at least one subfield having a different scan reference voltage in the address period.

5. The apparatus of claim 4, comprising means to adjust the scan reference voltage depending on the magnitude of a weighted value of a subfield.

6. The apparatus of claim 5, wherein the scan reference voltage is proportional to the magnitude of the weighted value of the subfield.

7. The apparatus of claim 5 or 6, wherein the magnitude of a weighted value represents brightness.

8. The apparatus of any one of claims 1 to 7, wherein the scan driver is arranged to supply a setup voltage having a ramp-up pulse, and a setdown voltage having a ramp-down pulse, to the scan electrode during the reset period.

9. The apparatus of claim 8, wherein the setup voltage starts from ground, and vertically rises to a first voltage and gradually rises to a second voltage.

10. The apparatus of any one of claims 1 to 7, wherein the scan driver is arranged to supply a setdown voltage having a ramp-down pulse to the scan electrode during the reset period of at least any one of third and later subfields.

11. A plasma display panel having a scan electrode, a sustain electrode and an address electrode, means for applying thereto a predetermined voltage by constituting one frame as a combination of a plurality of subfields having different durations of emission and dividing each subfield into a reset period, an address period, and a sustain period,
and means to supply a scan reference voltage, which is greater than the lowest voltage of the reset period and is less than or the same as a reference voltage of the sustain period, and a scan pulse voltage, which is less than the scan reference voltage, to the scan electrode during the address period.

12. A driving device of a plasma display panel for displaying an image by applying a predetermined voltage to at least one electrode, by constituting one frame as a combination of a plurality of subfields having different durations of emission and dividing each subfield into a reset period for initialization, an address period for selecting a cell, and a sustain period for sustaining discharge of the selected cell, the driving device comprising:
a scan driver arranged to supply a scan reference voltage, which is greater than the lowest voltage of the reset period and is less than or the same as a reference voltage of the sustain period, and a scan pulse voltage, which is less than the scan reference voltage, to the scan electrode during the address period.

13. A driving method of a plasma display panel for displaying an image by applying a predetermined voltage to at least one electrode, by constituting one frame as a combination of a plurality of subfields having the different durations of emission and dividing each subfield into a reset period for initialization, an address period for selecting a cell, and a sustain period for sustaining discharge of the selected cell, the method comprising the step of:
supplying a scan reference voltage, which is greater than the lowest voltage of the reset period and is less than or the same as a reference voltage of the sustain period, and a scan pulse voltage, which is less than the scan reference voltage, to the scan electrode during the address period.
